# FASCICULE DE BREVET EUROPEEN

(11) **EP 3 554 817 B1**
(45) Date de publication et mention de la délivrance du brevet: **24.03.2021**
(21) Numéro de dépôt: 17821995.2
(22) Date de dépôt: 14.12.2017
(51) Int. Cl.: B29D 30/26

(54) **DISPOSITIF ET METHODE DE PREHENSION DE TRANSFERT ET DE DEPOSE D'UNE BANDE DE ROULEMENT SUR LE SOMMET D'UNE ENVELOPPE DE PNEUMATIQUE**
VORRICHTUNG UND VERFAHREN ZUM GREIFEN, ÜBERTRAGEN UND ABLEGEN EINER LAUFFLÄCHE AUF DER KRONE EINER REIFENKARKASSE
DEVICE AND METHOD FOR GRIPPING, TRANSFERRING AND DEPOSITING A TREAD ON THE CROWN OF A TYRE CASING

(30) Priorité: 16.12.2016 FR 1662664
(43) Date de publication de la demande: 23.10.2019
(73) Titulaire: Compagnie Générale des Etablissements Michelin, 63000 Clermont-Ferrand (FR)
(72) Inventeur: CHOUZENOUX, Christophe, 63040 Clermont-Ferrand Cedex 9 (FR); CROSNIER, Gérard, 63040 Clermont-Ferrand Cedex 9 (FR); MIOCHE, Gilles, 63040 Clermont-Ferrand Cedex 9 (FR); CAPPA, Bernard, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2017/053560
(87) Numéro de publication internationale: WO 2018/109392

(56) Documents cités:
- WO-A1-2013/115794
- FR-A1- 2 275 307
- US-A- 3 442 746
- US-A- 3 738 893
- US-A- 4 079 980
- US-A- 4 178 198

## Description

L'invention concerne les dispositifs d'assemblage de pneumatique en général, et plus particulièrement un dispositif de préhension de transfert et de pose d'une bande de roulement sur les nappes de renfort sommet d'une enveloppe de pneumatique , ainsi que la méthode associée.

Dans le cas de la fabrication d'un pneumatique, la pose de la ceinture de renfort sommet, composée d'une pluralité de nappes comprenant des fils de renfort parallèles entre eux et faisant un angle donné avec la direction longitudinale du pneumatique, se fait communément sur un tambour d'assemblage de diamètre donné.

Après avoir déposé les nappes de renfort sommet, on procède à la pose de la bande de roulement en prélevant un tronçon de longueur déterminée dans une bobine continue et, après avoir enroulé le tronçon autour du sommet de l'enveloppe, on joint les deux extrémités dudit tronçon en réalisant une soudure bout à bout.

Ce mode opératoire reste toutefois limité aux pneumatiques de petite dimension. En effet, lorsque la taille et l'épaisseur de la bande de roulement augmentent, il devient difficile de pratiquer une jonction de qualité sans créer une singularité au niveau de la soudure.

Pour s'affranchir de cette difficulté, on réalise la bande de roulement sur un tambour de confection cylindrique à diamètre variable, en enroulant à chaud sur plusieurs tours, une bande continue de faible section ou une feuille continue de faible épaisseur jusqu'à obtenir un anneau fermé sur lui-même et présentant un profil transversal prédéterminé.

A l'issue de cette étape, on vient prélever la bande de roulement non vulcanisée et encore chaude, du tambour de confection pour venir la déposer sur les nappes de renfort placées sur le tambour d'assemblage.

Il est donc nécessaire de présenter la bande de roulement à un diamètre légèrement supérieur au diamètre extérieur des nappes ou de l'enveloppe de manière à en faciliter l'introduction selon une direction axiale.

Pour réaliser ce transfert, de nombreuses alternatives sont alors possibles.

Une première technique consiste à venir saisir la bande de roulement par sa face radialement externe à l'aide d'un anneau à vide. Il est alors nécessaire d'augmenter le diamètre du tambour de confection jusqu'à ce que la pression de contact entre l'anneau à vide et la face radialement externe de la bande de roulement soit suffisante pour permettre au vide de s'établir. Une fois la bande de roulement maintenue dans l'anneau à vide on décharge le tambour de confection après avoir réduit son diamètre, et on transfère axialement la bande de roulement au droit des nappes de renfort sommet enroulées autour du tambour d'assemblage. La dépose de la bande de roulement sur les nappes de renfort se fait en relâchant le vide, soit directement, soit après avoir augmenté le diamètre du tambour d'assemblage pour venir mettre en contact la face radialement externe des nappes de renfort avec la face radialement interne de la bande de roulement. Ce dispositif présente néanmoins l'inconvénient d'être lourd et peu adaptable dimensionnellement. De plus, après avoir dégagé la bande de roulement du tambour de confection, on observe parfois un relâchement du vide sous l'effet des forces de retrait s'exerçant sur l'élastomère encore chaud formant la bande de roulement.

Bien qu'il ne soit pas spécifiquement adapté au transfert d'une bande de roulement formée d'un élastomère non vulcanisé et encore chaud, un anneau de ce type est décrit à titre d'exemple dans la publication EP 0 685 324. Des dispositifs de transfert d'anneau sont divulgués par les documents US 3 738 893, WO 2013/115794, FR 2 275 307, US 3 442 746, US 4 079 980 et US 4 178 198.

Une autre technique, plus répandue dans le domaine du rechapage, consiste à installer la bande de roulement en forme d'anneau sur une pluralité de doigts de relevage orientés selon la direction axiale, et venant au contact de la surface radialement interne de la bande de roulement. Un mécanisme adapté pilote le déplacement dans la direction radialement externe desdits doigts de relevage pour augmenter le diamètre de la bande de roulement qui peut alors être positionnée au droit de la ceinture de renfort sommet. Le désengagement des doigts de relevage se fait alors selon un mouvement axial en prenant la précaution de ne pas dégrader la surface radialement interne de la bande de roulement et de ne pas provoquer de mouvements axiaux non désirés de ladite bande de roulement.

Ce mode opératoire présente l'avantage de mettre à profit l'élasticité des élastomères composant la bande de roulement, qui peut alors exercer après désengagement des doigts de relevage, une force de frettage radiale naturelle pour assurer la mise en joint de la surface radialement intérieure de la bande de roulement sur la surface radialement extérieure de la ceinture de renfort sommet.

Un mécanisme de ce type est décrit dans les publications EP 1 260 351, WO 2013179792, et dans lesquelles les doigts de relevage sont disposés axialement d'un seul côté de la bande de roulement occasionnant, en l'absence de moyens spécifiques permettant de maintenir la bande de roulement dans une position axiale précise, des mouvements de cette dernière au moment du désengagement axial des doigts de relevage.

La publication WO 2013115794 apporte une solution partielle à ce problème en proposant de disposer les doigts de relevage axialement de part et d'autre de la bande de roulement.

Toutefois, ces publications, décrivant des dispositifs adaptés aux opérations de rechapage dans lesquelles la bande de roulement se présente sous la forme d'un anneau profilé formé d'un élastomère vulcanisé et à température ambiante, restent muettes sur les moyens permettant d'extraire d'un tambour de confection une bande de roulement annulaire formée d'un élastomère non vulcanisé et chaud. De plus elles ne prévoient pas de moyens performants permettant de maintenir la bande de roulement dans une position axiale précise tout au long du transfert, depuis la saisie sur le tambour de confection jusqu'à la mise en joint sur le tambour d'assemblage.

Le dispositif de transfert d'un anneau d'élastomère selon l'invention et la méthode associée, ont pour objet d'apporter une solution concrète aux problèmes évoqués ci-dessus.

Le dispositif de transfert comprend une structure annulaire sur laquelle est disposée circonférentiellement une pluralité de modules de préhension, chacun des modules comprenant :
- deux doigts de relevage destinés à engager la surface radialement interne de la bande de roulement, disposés en vis-à-vis de part et d'autre d'un plan de symétrie, mobiles axialement dans des directions opposées par rapport audit plan de symétrie, et mobiles radialement entre une pluralité de positions radiales prédéterminées,
- une semelle de frettage mobile radialement sous l'action d'un ou plusieurs vérins de frettage, et destinée à venir en contact avec la surface radialement externe de la bande de roulement.

Ce dispositif se caractérise en ce que les vérins de frettage sont régulés en pression autour de plusieurs pressions de consignes distinctes les unes des autres, de sorte que à, une pression de consigne donnée, identique pour l'ensemble des vérins de frettage du dispositif de transfert, la pression d'application exercée par la semelle de frettage sur la surface radialement externe de la bande roulement est constante quelle que soit la position radiale de ladite semelle de frettage.

L'invention a également pour objet une méthode de transfert d'une bande de roulement à l'aide d'un dispositif selon les caractéristiques ci-dessus, comprenant les étapes au cours desquelles :
- étape a : on installe une bande de roulement en forme d'anneau sur un tambour de confection cylindrique à diamètre variable.
- étape b : en faisant correspondre une ligne centrale de la bande de roulement et le plan de symétrie des doigts de relevage, on met en appui les semelles de frettage sur la surface radialement externe de la bande de roulement, en réglant la pression dans les vérins de frettage à une première pression de consigne,
- étape c : on réduit le diamètre du premier tambour jusqu'à ce que la surface radialement interne de la bande de roulement ne soit plus en contact avec la surface du tambour de confection, et on transfère axialement la structure annulaire,
- étape d : on place les doigts de relevage dans une première position radiale et on positionne axialement les doigts de relevage en vis à vis de la surface radialement interne de la bande de roulement, lesdits doigts de relevage étant disposés latéralement de part et d'autre de la bande de roulement à équidistance du plan médian de symétrie,
- étape e : on déplace les doigts de relevage dans une seconde position radiale de manière à saisir la bande de roulement par sa surface radialement interne et à augmenter la circonférence de la bande de roulement,
- étape f : on déplace axialement le dispositif de transfert de manière à positionner la face radialement interne de la bande de roulement en vis à vis de la surface radialement externe d'une ceinture de renfort sommet de pneumatique préalablement disposée sur un tambour d'assemblage,
- étape g : on déplace les doigts de relevage dans une troisième position radiale de manière à réduire la circonférence de la bande de roulement, jusqu'à ce que la partie centrale de la bande de roulement vienne en contact avec la surface radialement externe de la ceinture de renfort sommet.
- étape h : on désengage axialement les doigts de relevage de la bande de roulement,
- étape i : on relève les semelles de frettage.

Pendant toutes les étapes du procédé, le dispositif selon l'invention permet donc d'exercer par l'intermédiaire des semelles, une pression radiale adaptée sur toute la circonférence de la surface radialement externe de la bande de roulement. Cette pression d'application variable permet dans un premier temps, au cours de l'étape b de prélever la bande de roulement du tambour de confection en la saisissant par sa surface externe. Dans cette première situation, la valeur de consigne de la pression doit être ajustée pour que les semelles exercent une pression d'application suffisante pour maintenir la bande de roulement, mais sans excès de manière à éviter le flambage.

Après son extraction du tambour de confection au cours de l'étape c, les forces de retrait qui s'exercent sur le matériau élastomérique encore chaud, peuvent avoir pour effet de provoquer une réduction du diamètre de l'anneau formé par la bande de roulement. Les semelles de frettage peuvent alors accompagner ce mouvement en réduisant leur position radiale tout en continuant d'exercer une pression d'application constante de manière à ne pas laisser la bande de roulement s'échapper de l'emprise des semelles de frettage.

Cette pression d'application reste également constante lorsque, au cours de l'étape d, les doigts de relevage viennent se mettre en appui sur la surface radialement interne de la bande de roulement afin d'en augmenter le diamètre. La bande de roulement est alors pincée entre les semelles de frettage et les doigts de relevage avec une force constante qu'il est possible de réduire en abaissant la valeur de la pression de consigne. Il en résulte une conservation précise de la position de la bande de roulement par rapport à l'axe de symétrie depuis l'extraction de la bande de roulement du tambour de confection jusqu'à la dépose de la bande de roulement sur le tambour d'assemblage.

De même, comme on le verra par la suite, au cours des étapes suivant l'étape h, après que la partie centrale de la surface radialement interne de la bande de roulement ait été mise en contact avec la surface radialement externe de la ceinture de renfort sommet, il est possible, moyennant la mise en œuvre de moyens complémentaires, de réduire la valeur de consigne de pression dans les vérins de frettage au droit des semelles de frettage afin de faciliter l'extraction des doigts de relevage.

Enfin, une fois les doigts de relevage retirés, on peut à nouveau augmenter la valeur de consigne de la pression pour exercer une pression de frettage plus importante, dans le but de mettre en joint la surface radialement interne de la bande de roulement avec la surface radialement externe de la ceinture de renfort sommet.

Le pilotage des valeurs de consigne de pression et la régulation de la pression dans les vérins de frettage autour de ces valeurs sont assurés par des dispositifs ne faisant pas partie de l'invention.

Le dispositif et la méthode selon l'invention peuvent aussi comprendre isolément, ou en combinaison, les caractéristiques suivantes :
- Les modules de préhension sont répartis de manière équidistante sur l'ensemble de la circonférence de la structure annulaire.
- Pour chacune des positions radiales prédéterminées des doigts de relevage, la surface radialement externe des doigts de relevage est sensiblement inscrite sur un cylindre.
- La face radialement interne des semelles de frettage comporte des piques pour pénétrer dans la surface radialement externe de la bande de roulement.
- Chaque doigt de relevage est monté sur un chariot par l'intermédiaire d'un ou plusieurs axes, se déplaçant radialement dans une lumière pratiquée dans le corps du chariot, dont la course est limitée dans la direction radialement interne, et dans lequel un moyen élastique dont l'action a pour effet d'éloigner le doigt de relevage du chariot est interposé entre le doigt de relevage et le chariot.
- Une roulette d'axe perpendiculaire à la direction axiale et à la direction radiale est disposée sur la face radialement interne de chaque doigt de relevage.
- La structure annulaire supporte en outre une pluralité de patins d'application, destinés à venir en contact avec la surface radialement externe de la bande de roulement, mobiles radialement sous l'action d'un vérin d'application, et disposés circonférentiellement sur la structure annulaire de sorte qu'un patin de frettage est placé entre deux semelles de frettage circonférentiellement juxtaposées.
- La structure annulaire est mobile axialement entre un tambour cylindrique de confection et un tambour cylindrique d'assemblage.

Et pour ce qui concerne la méthode :
- Au cours de l'étape b, on fait pénétrer une pluralité de piques dans la surface radialement externe de la bande de roulement.
- Au cours de l'étape g, les doigts de relevage viennent en contact avec la surface radialement externe de la ceinture de renfort sommet et se déplacent radialement sous l'effet de l'action des moyens élastiques.
- Au cours de l'étape h les doigts de relevage roulent sur la surface radialement externe de la ceinture de renfort sommet.
- Au cours de l'étape h, on exécute les sous-étapes au cours desquelles :
   ∘ étape ha: on met les patins d'application en contact avec la surface radialement externe de la bande de roulement, et on exerce une pression d'application de manière à mettre partiellement en joint la surface radialement interne de la bande de roulement et la surface radialement externe de la ceinture sommet,
   ∘ étape hb: on règle la pression dans les vérins de frettage à une troisième valeur de consigne, très inférieure à la première valeur de consigne,
   ∘ étape hc: on désengage axialement les doigts de relevage de la bande de roulement.
   ∘ étape hd : on règle la pression dans les vérins de frettage à une quatrième valeur de consigne supérieure ou égale à la première valeur de consigne de manière à mettre en joint l'ensemble de la surface radialement interne de la bande de roulement et de la surface radialement externe de la ceinture sommet.
- la bande de roulement est réalisée sur le tambour de confection par enroulement d'une bande de faible section ou d'une feuille de faible épaisseur, formées d'un matériau élastomérique non vulcanisé et chaud.
- La bande de roulement est un anneau, formé d'un matériau élastomérique vulcanisé et à température ambiante.

L'invention sera mieux comprise à la lecture des figures annexées, qui sont fournies à titre d'exemples et ne présentent aucun caractère limitatif, dans lesquelles :
- La figure 1 est une vue d'ensemble d'une machine d'assemblage comprenant un dispositif de transfert selon l'invention.
- La figure 2 est une vue de côté du dispositif de transfert.
- La figure 3 est une vue de face du module de préhension.
- La figure 4 est une vue de côté du module de préhension.
- La figure 5 est une vue en perspective avant du module de préhension.
- La figure 6 est une vue en perspective arrière du module de préhension.
- Les figures 7 à 18 sont des figures illustrant les positions respectives des organes du module de préhension au cours de l'exécution des étapes du procédé selon l'invention.
- La figure 15a est une vue de côté du dispositif de transfert à l'issue de l'étape ha.
- La figure 16a est une vue de détail du doigt de relevage.

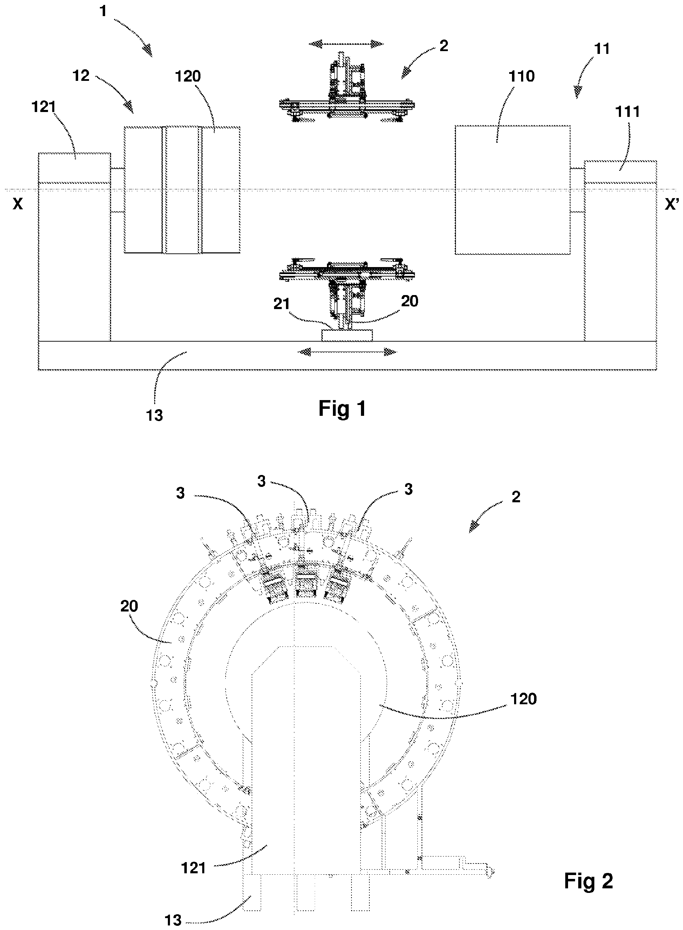

La machine d'assemblage 1 illustrée à la figure 1 comprend un châssis 13 sur lequel sont disposés :
- un poste de confection d'une bande de roulement 11 comprenant un bâti fixe 111 sur lequel est monté à rotation un tambour cylindrique à diamètre variable 110.
- Un poste d'assemblage 12 comprenant un tambour d'assemblage 120 monté à rotation sur un bâti fixe 121.
- Un dispositif de transfert 2 comprenant une structure annulaire 20 montée sur un chariot de transfert 21 mobile axialement entre le poste d'assemblage 12 et le poste de confection 11.

Le tambour d'assemblage 120, le tambour de confection 110 et la structure annulaire 20 sont alignées coaxialement autour d'une axe unique XX'.

La figure 2 est une vue d'ensemble du dispositif de transfert 2 permettant de visualiser la structure annulaire sur laquelle est monté une pluralité de modules de préhension 3. Ces modules de préhension 3 sont répartis de manière régulière tout autour de la circonférence de la structure annulaire 20.

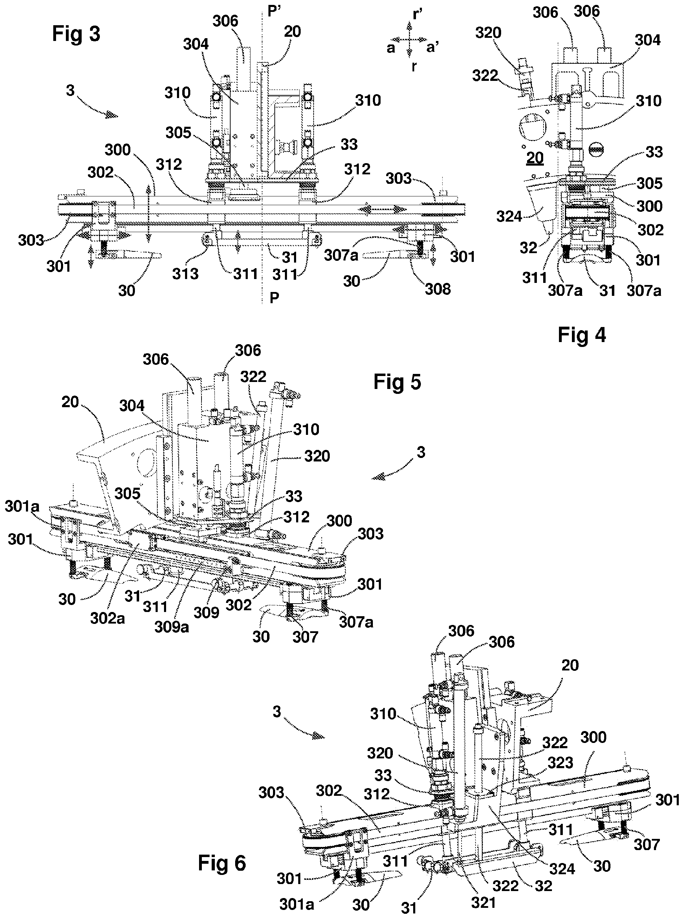

Les différents organes formant le module de préhension 3 sont détaillés dans les figures 3 à 6 ensemble, permettant, pour une meilleure compréhension, de visualiser ledit module 3 selon des angles de vue différents.

Les directions radiales rr' et axiales aa' sont représentées par les flèches disposées entre les figures 3 et 4.

Chaque module de préhension 3 comporte deux doigts de relevage 30, placés en vis-à-vis l'un de l'autre, et présentant une symétrie par rapport à un plan médian PP'.

Les doigts de relevage 30 sont montés sur des chariots de translation 301 se déplaçant dans la direction axiale sur un rail (non visible) monté sur une traverse 300. Les chariots 301 sont entrainés en mouvement par une courroie continue 302 circulant autour de deux poulies 303, d'axe sensiblement radial, et animées en rotation par un moteur (non visible). Les chariots 301 sont rendus solidaires de la courroie 302 par des attaches 301a disposées respectivement sur le trajet aller et sur le trajet retour de la courroie. Les chariots se déplacent donc dans des directions opposées et, selon le sens de rotation des poulies 303, les chariots 301 s'éloignent symétriquement l'un de l'autre ou se rapprochent symétriquement l'un de l'autre en référence au plan médian de symétrie PP'.

Une butée réglable 309 sur laquelle vient s'appuyer l'attache 302a, est disposée sur un des flancs avant ou arrière de la traverse 300 pour limiter la course de fermeture des chariots 301. Des orifices de positionnement 309a sont disposés sur le montant de la traverse 300 de manière à permettre un réglage rapide précis et reproductible des butées 309.

Chaque doigt de relevage 30 est relié à un chariot 301 par l'intermédiaire d'un ou plusieurs axes 307, se déplaçant radialement dans une lumière (non visible) pratiquée dans le corps du chariot 301, et dont la course est limitée dans la direction radialement interne par une butée (non visible). L'axe 307 ne peut donc pas s'extraire du chariot 301 sur lequel il est monté.

Des moyens élastiques 307a, dont l'action a pour effet d'éloigner le doigt de relevage 30 du chariot 301 sont interposés entre le doigt de relevage 30 et le chariot 301. Dans le cas d'espèce, ces moyens élastiques sont formés par un ressort 307a maintenu en compression entre la surface radialement externe du doigt de relevage 30 et la surface radialement interne du chariot 301. L'axe 307 peut avantageusement passer à l'intérieur des spires du ressort 307a.

Il résulte de ce montage que, à l'état libre, les doigts de relevage sont repoussés radialement du chariot 301, jusqu'à ce que la course de l'axe 307 soit limitée par la butée. En appuyant sur le doigt de relevage dans la direction radialement externe on comprime les ressorts, et on rapproche le doigt de relevage 30 du chariot 301.

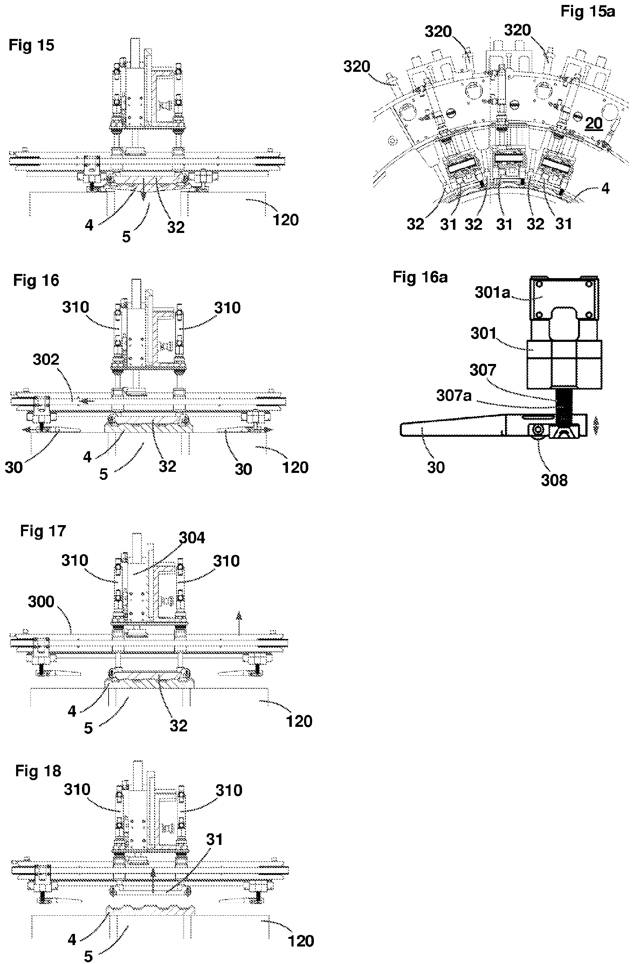

Les doigts de relevage 30, mieux visibles à la figure 16a, ont la forme générale d'une palette présentant une surface radialement externe légèrement arrondie pour éviter de marquer la surface radialement interne de la bande de roulement.

Un revêtement anti-collant peut avantageusement recouvrir la surface radialement externe des doigts de relevage 30.

Une roulette 308, d'axe perpendiculaire à la direction radiale et à la direction axiale, est disposée sur la face radialement interne de chaque doigt de relevage 30.

La traverse 300 est animée en translation dans la direction radiale par la tige mobile 305 d'un vérin 304 dont le corps est solidaire de la structure annulaire 20. Des tiges de guidage 306 permettent de maitriser l'orientation radiale du mouvement de la traverse. 300. Le vérin 304 permet de positionner la traverse 300, et par voie de conséquence les doigts de relevage 30, selon des positions radiales prédéterminées.

L'ensemble des vérins 304 disposés sur la structure annulaire 20 est piloté de sorte que, pour chacune des positions radiales prédéterminées des doigts de relevage 30, la surface radialement externe des doigts de relevage est sensiblement inscrite sur un cylindre.

Le module de préhension 3 comprend également une semelle de frettage 31 présentant une surface d'application sensiblement perpendiculaire à la direction radiale.

La semelle de frettage est animée en mouvement selon la direction radiale par deux vérins de frettage 310 fixés sur une platine 33, solidaire de la structure annulaire 20.

Les tiges mobiles 311 des vérins de frettage circulent librement au travers de deux paliers traversant 312 montés sur la structure de la traverse 300.

Il résulte de cet arrangement que la translation radiale de la semelle de frettage est indépendante de la position occupée par la traverse 300 et par les doigts de relevage 30.

Les deux vérins de frettage 310 sont identiques, et la pression régnant dans le corps de chacun de ces vérins, ainsi que dans ceux de tous les vérins de frettage du dispositif de transfert 2, est la même. Cette pression est régulée autour de plusieurs valeurs de consigne, distinctes les unes des autres, de manière à ce que, pour chacune de ces valeurs de consigne la pression d'application exercée par les semelles de frettage sur la surface radialement externe de la bande roulement reste constante autour d'une valeur donnée quelle que soit la position radiale desdites semelles de frettage.

La surface radialement interne de la semelle de frettage peut utilement comprendre des piques destinées à pénétrer dans l'élastomère formant la bande de roulement. Cet arrangement particulier permet de prévenir tous les mouvements axiaux non désirés de la bande de roulement par rapport au plan médian PP'.

La structure annulaire 20 supporte également une pluralité de patins d'application 32. Les patins d'application 32 sont décalés circonférentiellement par rapport aux semelles de frettage 31, de sorte qu'ils s'intercalent entre deux semelles de frettage circonférentiellementjuxtaposées comme cela est visible à la figure 15a.

Le patin d'application 32 visible en position repliée à la figure 4 et en position déployée à la figure 6, est destiné à venir presser la surface radialement externe de la bande de roulement. Il est fixé sur une équerre 324 solidaire de la structure annulaire 20. Le patin d'application est mobile radialement sous l'action d'un vérin d'application 320.

Une tige de guidage 322, reliée au patin d'application par une de ses extrémités, circule librement dans un palier de guidage 323 monté sur le corps de l'équerre 324.

Le mouvement et la position du patin d'application sont indépendants du mouvement et de la position des doigts de relevage 30 et de la semelle frettage 31.

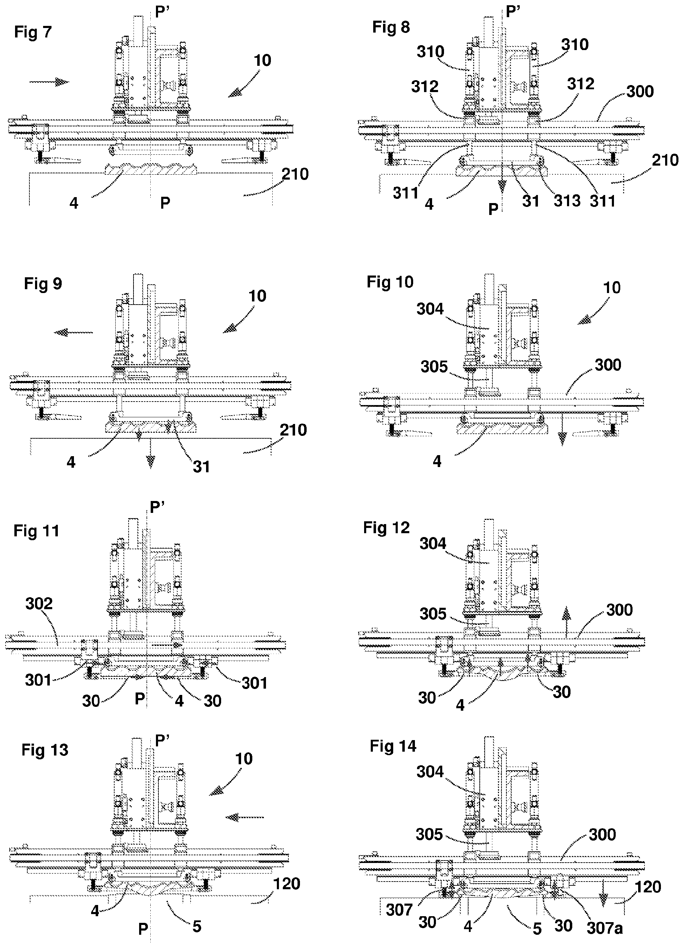

Les étapes successives de la méthode de transfert d'une bande de roulement en forme d'anneau sont décrites ci-après en s'appuyant sur les figures 7 à 18. Sur ces figures seuls sont indexés les organes dont les mouvements sont représentés par des flèches et sont spécifiques à une étape donnée.

**L'étape** a consiste à installer une bande de roulement 4 en forme d'anneau sur un tambour de confection cylindrique à diamètre variable 210.

On notera ici que cette bande de roulement peut tout aussi bien être formée par enroulement d'une bande d'élastomère non vulcanisé et chaud de faible section. On entend ici par faible section une bande dont la section est inférieure à 10cm², et préférentiellement comprise entre 1 cm² et 5 cm². Le profil définitif de la bande de roulement est obtenu par enroulements successifs, en déplaçant axialement dans un sens puis dans l'autre le point d'application de la bande sur le tambour de confection. En règle générale, la bande de faible section est issue directement d'une extrudeuse placée à proximité du tambour de confection.

Il est également possible de reconstituer une bande de roulement par enroulement sur plusieurs tours d'une feuille continue de faible épaisseur formée également d'un élastomère non vulcanisé et chaud. Le profil de la bande de roulement est obtenu en faisant varier la largeur de la feuille. On entend ici par faible épaisseur une épaisseur inférieure à 6 mm, et plus généralement comprise entre 1mm et 3mm. La feuille d'élastomère provient alors directement d'un moyen de calandrage situé en amont du tambour de confection.

De manière alternative, on peut installer sur le tambour d'assemblage 210 une bande de roulement 4 annulaire formée d'un matériau élastomérique déjà vulcanisé. Cette opération, plus spécifique d'un procédé de rechapage, est exécutée simplement en réduisant le diamètre du tambour d'assemblage 210 pour pouvoir glisser l'anneau formé par la bande de roulement sur le tambour 210. Une fois la bande de roulement 4 en position, le diamètre du tambour d'assemblage 210 est amené au diamètre intérieur de la bande de roulement. On observera également que dans le cas du rechapage dit à chaud, la nouvelle bande de roulement déposée sur la carcasse de pneumatique peut tout aussi bien provenir d'un dispositif d'enroulement à chaud similaire ou identique au dispositif décrit ci-dessus.

A l'issue de l'étape a, on approche le dispositif de transfert 2 du tambour de confection comme cela est illustré à la figure 7.

A **l'étape b,** illustrée à la figure 8, on positionne axialement le dispositif de transfert 2 de manière à faire correspondre précisément une ligne centrale de la bande de roulement avec le plan médian de symétrie PP' des doigts de relevage. On active les vérins de frettage 310, pour mettre les semelles de frettage 31 en appui sur la surface radialement externe de la bande de roulement 4. Au cours de ce mouvement, les tiges 311 des vérins 310 circulent dans les paliers traversant 312 montés sur la traverse 300 dont la position radiale reste inchangée. La pression dans les vérins de frettage 310 est ajustée à une première pression de consigne. Cette première pression de consigne est réglée pour assurer le maintien de la bande de roulement par les semelles de frettage 31. Une pression trop forte a pour conséquence de faire flamber la bande de roulement sur elle-même, et une pression trop faible ne permet pas d'assurer un maintien ferme de cette dernière. La valeur de cette première pression de consigne est donc ajustée expérimentalement en tenant compte de l'épaisseur et du diamètre de la bande de roulement.

Les piques 313 pénètrent dans la surface radialement externe de la bande de roulement 4. Il en résulte un maintien renforcé de la bande de roulement par le dispositif de transfert 2. La mise en référence de la bande de roulement par rapport au plan médian PP' peut alors être garantie pendant la mise en œuvre des étapes suivantes.

A **l'étape c** illustrée à la figure 9, on réduit le diamètre du tambour d'assemblage 210 jusqu'à ce que la surface radialement interne de la bande de roulement ne soit plus en contact avec la surface du tambour de confection. La bande de roulement 4 n'est alors maintenue que par la seule action des semelles de frettage 31.

Au cours de cette étape, en particulier lorsque la bande de roulement est formée d'un mélange élastomérique non vulcanisé et chaud, les forces de retrait liées à la libération des contraintes circonférentielles ont pour effet de réduire le diamètre de la bande de roulement 4. Les semelles de frettage 31 accompagnent la bande de roulement dans ce mouvement. La pression de consigne dans les vérins 310 reste inchangée et la pression d'application exercée par les semelles de frettage 31 sur la surface radialement externe de la bande de roulement reste constante.

A l'issue de l'étape c, on transfère axialement le dispositif de transfert 2 pour extraire la bande de roulement 4 du tambour de confection 210.

A **l'étape d** illustrée à la figure 10, on abaisse la traverse 300 en actionnant le vérin 304 de manière à placer les doigts de relevage 30 dans une première position radiale dans laquelle le diamètre du cylindre tangent à la surface radialement externe des doigts de relevage 30 est légèrement inférieur au diamètre de la bande de roulement. On notera que le diamètre de la bande de roulement 4 a pu connaitre des variations au cours de l'étape précédente, et la détermination de cette première position radiale des doigts de relevage résulte d'une action expérimentale.

On autorise alors le déplacement axial des doigts de relevage 30 de sorte qu'ils soient disposés en vis-à-vis de la surface radialement interne de la bande de roulement 4. Les doigts de relevage 30 sont alors disposés latéralement de part et d'autre de la bande de roulement 4 à équidistance d'une ligne centrale de la dite bande de roulement qui est alignée avec le plan médian de symétrie PP', comme cela est illustré à la figure 11.

A **l'étape e,** illustrée à la figure 12, on déplace la traverse 300 radialement vers l'extérieur en actionnant le vérin 304 de manière à placer les doigts de relevage 30 dans une seconde position radiale afin de saisir la bande de roulement 4 par sa surface radialement interne et augmenter la circonférence de la bande de roulement 4.

La bande de roulement est alors prise en tenaille entre les doigts de relevage 30 et les semelles 31 avec une force de pincement constante. Cette force de pincement peut être ajustée en réduisant la pression dans les vérins de frettage à une seconde valeur de consigne plus faible que la première valeur de consigne.

On observe, au cours de cette étape, que la bande de roulement 4 ne se déforme pas uniformément dans la direction radiale. En effet la partie centrale de la bande de roulement, qui n'est pas soutenue par les doigts de relevage 30, a un diamètre plus réduit que les parties axialement extérieure et forme un bombé.

On ajuste la seconde position radiale des doigts de relevage 30 pour que le diamètre de la bande de roulement au centre du bombé soit supérieur au diamètre de la ceinture de renfort sommet sur laquelle la bande de roulement est destinée à être déposée à l'étape suivante.

A **l'étape f,** illustrée à la figure 13, on déplace axialement le dispositif de transfert 2 de manière à positionner la surface radialement interne de la bande de roulement au droit du tambour d'assemblage 120 sur lequel une ceinture de renfort sommet 5 a été déposée préalablement.

On observera ici que, dans le cas du rechapage, la ceinture sommet est formée par la surface supérieure du bandage dont on a préalablement enlevé les épaisseurs de gomme correspondant à la bande de roulement usée.

On veillera au cours de cette étape à faire coïncider précisément la ligne centrale de la ceinture de renfort sommet 5 avec le plan médian de symétrie PP' du dispositif de transfert 2, lequel a été aligné au cours de l'étape b avec la ligne centrale de la bande de roulement 4.

A **l'étape g,** illustrée à la figure 14, on déplace les doigts de relevage 30 dans une troisième position radiale en actionnant le vérin 304 pour abaisser radialement vers l'intérieur la traverse 300, de manière à réduire la circonférence de la bande de roulement 4, jusqu'à ce que la partie centrale de la bande de roulement vienne en contact avec la surface radialement externe de la ceinture de renfort sommet 5.

Au cours de cette étape il se peut que la partie radialement interne des doigts de relevage vienne en contact avec la surface radialement externe de la ceinture de renfort sommet. En fonction du profil de la ceinture, le ressort 307a est comprimé et l'axe 307 rentre dans le corps du chariot de translation 301. Les doigts de relevage peuvent ainsi se déplacer radialement par rapport au chariot de translation 301 et à la traverse 300, en exerçant une force d'application constante sur la surface de la ceinture de renfort sommet, que l'on évite de la sorte de détériorer.

A **l'étape h** on désengage axialement les doigts de relevage de la bande de roulement comme cela est illustré à la figure 16.

Ce désengagement peut se faire directement.

On observe toutefois que ce mouvement est susceptible d'entrainer des déplacements non maitrisés de la bande de roulement 4 dans la direction axiale. En effet, les vérins de frettage sont toujours régulés à la seconde pression de consigne, et la pression d'application exercée par les semelles de frettage 31 sur la surface radialement externe de la bande de roulement vient contrarier le mouvement axial des doigts de frettage qui sont comprimés entre la surface radialement interne de la bande de roulement et la surface radialement externe de la ceinture de renfort sommet 5. Et tout relâchement de la pression dans les vérins de frettage viendrait aggraver ces perturbations.

Il apparait donc judicieux de décomposer l'étape h en une série de sous-étapes permettant d'éviter l'inconvénient ci-dessus.

A **l'étape ha,** en référence à la figure 15, préalablement à la sortie des doigts de relevage 30, on actionne les vérins 320 de manière à venir appuyer fermement les patins d'application 32 sur la surface radialement externe de la bande de roulement. La pression exercée par les patins d'application 32 a pour effet de mettre partiellement en joint la bande de roulement et la ceinture sommet au droit des patins d'application. Les mouvements axiaux de la bande de roulement sont alors bloqués.

Et il devient alors possible de relâcher sans risque la pression dans les vérins de frettage 310 de manière à réduire la pression d'application des semelles 31 disposées entre chacun des patins d'application 32 au droit des doigts de frettage.

A **l'étape hb,** La pression dans les vérins de frettage est amenée à une troisième valeur de consigne aussi réduite que possible. Cette troisième valeur de consigne est ajustée de sorte que les semelles 31 ne puissent pas perdre le contact avec la surface radialement externe de la bande de roulement et que les piques restent incrustées dans l'élastomère. En pratique, on ajuste la troisième valeur de consigne de sorte que les semelles placées dans la partie circonférentielle la plus basse de la structure annulaire 20 ne se retirent pas sous l'effet de la gravité.

A **l'étape hc,** et en référence à la figure 16, on désengage axialement les doigts de relevage 30 de la bande de roulement 4 en actionnant la courroie 302 de sorte que les chariots qui supportent les doigts de relevage s'éloignent axialement l'un de l'autre.

Au cours de cette étape, les faces radialement externes des doigts de relevage glissent sur la surface radialement interne de la bande de roulement. Les forces s'opposant au glissement des doigts de relevage peuvent être réduites par l'anti-collant déposé sur les faces radialement externes. Les faces radialement internes des doigts de relevage 30, qui sont en appui sur les roues 308, roulent sur la surface radialement externe de la ceinture de renfort sommet 5 sans les détériorer.

A **l'étape hd:** on règle la pression dans les vérins de frettage 310 à une quatrième valeur de consigne supérieure ou égale à la première valeur de consigne de manière à augmenter la pression d'application des semelles 31, et mettre en joint l'ensemble de la surface radialement interne de la bande de roulement 5 et de la surface radialement externe de la ceinture sommet 5.

La pression d'application conjuguée des semelles 31 et de patins d'application 32 offre ainsi la possibilité de réaliser une mise en joint uniforme de la bande de roulement 4 sur la ceinture de renfort sommet 5 installée sur le tambour d'assemblage 120.

Au cours de cette étape, on peut également déplacer radialement vers l'extérieur la traverse 300 en actionnant les vérins 304.

**L'étape i,** en référence à la figure 18, est l'étape finale de la mise en œuvre du procédé au cours de laquelle on remonte radialement vers l'extérieur les semelles de frettage 31 et les patins d'application 32, de manière à permettre le désengagement du dispositif de transfert 2 du poste d'assemblage 12.

Les étapes faisant l'objet de la description qui précède permettent donc de transférer une bande de roulement depuis un poste de confection sur un poste d'assemblage en s'assurant que, à chaque instant, le positionnement de la bande de roulement par rapport au plan médian PP' puis par rapport à la ligne centrale de la ceinture sommet soit maintenu.

La possibilité offerte par le dispositif selon l'invention de faire varier à volonté la valeur de consigne dans les vérins de frettage permet d'adapter la pression d'application des semelles sur la surface radialement externe de la bande de roulement au juste nécessaire pour obtenir la précision du résultat recherché.

### NOMENCLATURE

1 Machine d'assemblage.
11 Poste de confection de la bande de roulement.
110 Tambour cylindrique de confection.
111 Bâti du poste de confection.
12 Poste d'assemblage de la bande de roulement sur le sommet de l'enveloppe de pneumatique.
120 Tambour cylindrique d'assemblage.
121 Bâti du poste d'assemblage.
13 Châssis.
2 Dispositif de transfert.
20 Structure annulaire.
21 Chariot de transfert.
3 Module de préhension.
30 Doigt de relevage.
300 Traverse mobile.
301 Charriot de translation.
301a Liaison du chariot avec la courroie.
302 Courroie.
302a Attaches d'entrainement.
303 Poulies.
304 Vérin de translation de la traverse mobile.
305 Tige du vérin de translation de la traverse mobile.
306 Tige de guidage de la traverse mobile.
307 Axe.
307a Ressort.
308 Roulette.
309 Butée.
309a Orifices de positionnement.
31 Semelle de frettage.
310 Vérin de frettage.
311 Tige du vérin de frettage
312 Palier traversant.
313 Piques.
32 Patin d'application.
320 Vérin du patin d'application.
321 Tige du vérin d'application.
322 Tige de guidage du vérin d'application.
323 Palier de guidage du vérin du patin d'application.
324 Equerre.
33 Platine.
4 Bande de roulement.
5 Ceinture de renfort sommet.
PP' Plan médian de symétrie.

## Revendications

1. Dispositif de transfert (2) d'un anneau d'élastomère destiné à former une bande de roulement de pneumatique (4) comprenant une structure annulaire (20) sur laquelle est disposée circonférentiellement une pluralité de modules de préhension (3), chacun des modules comprenant :
- deux doigts de relevage (30) destinés à engager la surface radialement interne de la bande de roulement (4), disposés en vis-à-vis de part et d'autre d'un plan de symétrie (PP', mobiles axialement dans des directions opposées par rapport audit plan de symétrie (PP') et mobiles radialement entre une pluralité de positions radiales prédéterminées,
- une semelle de frettage (31) mobile radialement sous l'action d'un ou plusieurs vérins de frettage (310), et destinée à venir en contact avec la surface radialement externe de la bande de roulement (4),
**caractérisé en ce que** les vérins de frettage (310) sont régulés en pression autour de plusieurs pressions de consignes distinctes les unes des autres, de sorte que à, une pression de consigne donnée, identique pour l'ensemble des vérins de frettage du dispositif de frettage, la pression d'application exercée par la semelle de frettage (31) sur la surface radialement externe de la bande roulement (4) est constante quelle que soit la position radiale de ladite semelle de frettage.

2. Dispositif de transfert (2) selon la revendication 1, dans lequel les modules de préhension (3) sont répartis de manière équidistante sur l'ensemble de la circonférence de la structure annulaire (20).

3. Dispositif de transfert (2) selon la revendication 1 ou la revendication 2, dans lequel pour chacune des positions radiales prédéterminées des doigts de relevage (30), la surface radialement externe des doigts de relevage est sensiblement inscrite sur un cylindre.

4. Dispositif de transfert (2) selon l'une quelconque des revendications précédentes, dans lequel la face radialement interne des semelles de frettage (31) comporte des piques (313) pour pénétrer dans la surface radialement externe de la bande de roulement.

5. Dispositif de transfert (2) selon l'une quelconque des revendications précédentes, dans lequel chaque doigt de relevage (30) est monté sur un chariot (301) par l'intermédiaire d'un ou plusieurs axes (307), se déplaçant radialement dans une lumière pratiquée dans le corps du chariot (301), dont la course est limitée dans la direction radialement interne, et dans lequel un moyen élastique (307a) dont l'action a pour effet d'éloigner radialement le doigt de relevage (30) du chariot (301), est interposé entre le doigt de relevage (30) et le chariot (301).

6. Dispositif de transfert (2) selon l'une quelconque des revendications précédentes, dans lequel une roulette (308) d'axe perpendiculaire à la direction axiale et à la direction radiale est disposée sur la face radialement interne de chaque doigt de relevage (30).

7. Dispositif de transfert (2) selon l'une quelconque des revendications précédentes dans lequel la structure annulaire (20) supporte en outre une pluralité de patins d'application (32) destinés à venir en contact avec la surface radialement externe de la bande de roulement (4) mobiles radialement sous l'action d'un vérin d'application (320) et disposés circonférentiellement sur la structure annulaire (20) de sorte qu'un patin de frettage (32) est placé entre deux semelles de frettage (31) circonférentiellement juxtaposées.

8. Dispositif de transfert (2) selon l'une des revendications précédentes dans lequel la structure annulaire(20) est mobile axialement entre un tambour cylindrique de confection (110) et un tambour cylindrique d'assemblage (120).

9. Méthode de transfert d'une bande de roulement (4) en forme d'anneau à l'aide d'un dispositif selon l'une quelconque des revendications 1 à 8, dans laquelle on met en œuvre les étapes au cours desquelles :
- étape a : on installe une bande de roulement (4) en forme d'anneau sur un tambour de confection (110) cylindrique à diamètre variable.
- étape b : en faisant correspondre une ligne centrale de la bande de roulement et le plan de symétrie (PP') des doigts de relevage (30), on met en appui les semelles de frettage (31) sur la surface radialement externe de la bande de roulement (4), en réglant la pression dans les vérins de frettage à une première pression de consigne,
- étape c : on réduit le diamètre du tambour de confection (110) jusqu'à ce que la surface radialement interne de la bande de roulement (4) ne soit plus en contact avec la surface du tambour de confection (110), et on transfère axialement la structure annulaire (20),
- étape d : on place les doigts de relevage (30) dans une première position radiale et on positionne axialement les doigts de relevage (30) en vis à vis de la surface radialement interne de la bande de roulement (4), lesdits doigts de relevage (30) étant disposés latéralement de part et d'autre de la bande de roulement (4) à équidistance du plan médian de symétrie (PP'),
- étape e : on déplace les doigts de relevage (30) dans une seconde position radiale de manière à saisir la bande de roulement (4) par sa surface radialement interne et à augmenter la circonférence de la bande de roulement (4),
- étape f : on déplace axialement le dispositif de transfert (2) de manière à positionner la face radialement interne de la bande de roulement (4) en vis à vis de la surface radialement externe d'une ceinture de renfort sommet (5) de pneumatique préalablement disposée sur un tambour d'assemblage (120),
- étape g : on déplace les doigts de relevage (30) dans une troisième position radiale de manière à réduire la circonférence de la bande de roulement (4), jusqu'à ce que la partie centrale de la bande de roulement (4) vienne en contact avec la surface radialement externe de la ceinture de renfort sommet (5).
- étape h : on désengage axialement les doigts de relevage (30) de la bande de roulement (4),
- étape i: on remonte radialement vers l'extérieur les semelles de frettage (31), de manière à permettre le désengagement du dispositif de transfert du poste d'assemblage.

10. Méthode de transfert selon la revendication 9 à l'aide d'un dispositif de transfert selon la revendication 4, dans laquelle, au cours de l'étape b, on fait pénétrer une pluralité de piques (313) dans la surface radialement externe de la bande de roulement (4).

11. Méthode de transfert selon la revendication 9 ou la revendication 10 à l'aide d'un dispositif de transfert selon la revendication 5, dans laquelle au cours de l'étape g, les doigts de relevage (30) viennent en contact avec la surface radialement externe de la ceinture de renfort sommet (5) et se déplacent radialement sous l'effet de l'action des moyens élastiques (307a).

12. Méthode de transfert selon la revendication 11 à l'aide d'un dispositif de transfert selon la revendication 6, dans laquelle, au cours de l'étape h les doigts de relevage (30) roulent sur la surface radialement externe de la ceinture de renfort sommet (5).

13. Méthode de transfert selon l'une quelconque des revendications 9 à 12 à l'aide d'un dispositif de transfert selon la revendication 7, dans laquelle, au cours de l'étape h, on exécute les sous-étapes au cours desquelles :
- étape ha : on met les patins d'application (32) en contact avec la surface radialement externe de la bande de roulement (4), et on exerce une pression d'application de manière à mettre partiellement enjoint la surface radialement interne de la bande de roulement (4) et la surface radialement externe de la ceinture sommet (5),
- étape hb: on règle la pression dans les vérins de frettage (310) à une troisième valeur de consigne, très inférieure à la première valeur de consigne,
- étape hc: on désengage axialement les doigts de relevage (30) de la bande de roulement (4).
- étape hd : on règle la pression dans les vérins de frettage (310) à une quatrième valeur de consigne supérieure ou égale à la première valeur de consigne de manière à mettre en joint l'ensemble de la surface radialement interne de la bande de roulement (4) et de la surface radialement externe de la ceinture sommet (5).

14. Méthode de transfert selon l'une quelconque des revendications 9 à 13, dans laquelle la bande de roulement (4) est réalisée sur le tambour de confection (110) par enroulement d'une bande de faible section ou d'une feuille de faible épaisseur, formées d'un matériau élastomérique non vulcanisé et chaud..

15. Méthode de transfert selon l'une quelconque des revendications 9 à 13, dans laquelle la bande de roulement (4) est un anneau, formé d'un matériau élastomérique vulcanisé et à température ambiante.

## Patentansprüche

1. Vorrichtung zum Transfer (2) eines Elastomerringes, der dazu bestimmt ist, einen Laufstreifen (4) eines Reifens zu bilden, welche eine ringförmige Struktur (20) umfasst, auf welcher in Umfangsrichtung mehrere Greifmodule (3) angeordnet sind, wobei jedes der Module umfasst:
- zwei Hubfinger (30), die dazu bestimmt sind, an der radial inneren Fläche des Laufstreifens (4) anzugreifen, einander gegenüber beiderseits einer Symmetrieebene (PP') angeordnet sind, in entgegengesetzten Richtungen in Bezug auf die Symmetrieebene (PP') beweglich sind und zwischen mehreren vorbestimmten radialen Positionen radial beweglich sind,
- eine Aufziehsohle (31), die unter der Wirkung eines oder mehrerer Aufziehzylinder (310) radial beweglich ist und dazu bestimmt ist, mit der radial äußeren Fläche des Laufstreifens (4) in Kontakt zu kommen,
**dadurch gekennzeichnet, dass** die Aufziehzylinder (310) hinsichtlich des Druckes im Bereich mehrerer voneinander verschiedener Solldrücke derart geregelt werden, dass bei einem gegebenen Solldruck, der für die Gesamtheit der Aufziehzylinder der Aufziehvorrichtung identisch ist, der Anpressdruck, der von der Aufziehsohle (31) auf die radial äußere Fläche des Laufstreifens (4) ausgeübt wird, konstant ist, unabhängig von der radialen Position der Aufziehsohle.

2. Vorrichtung zum Transfer (2) nach Anspruch 1, wobei die Greifmodule (3) auf dem gesamten Umfang der ringförmigen Struktur (20) in gleichmäßigen Abständen verteilt sind.

3. Vorrichtung zum Transfer (2) nach Anspruch 1 oder Anspruch 2, wobei für jede der vorbestimmten radialen Positionen der Hubfinger (30) die radial äußere Fläche der Hubfinger im Wesentlichen in einen Zylinder einbeschrieben ist.

4. Vorrichtung zum Transfer (2) nach einem der vorhergehenden Ansprüche, wobei die radial innere Seite der Aufziehsohlen (31) Stacheln (313) zum Eindringen in die radial äußere Fläche des Laufstreifens aufweist.

5. Vorrichtung zum Transfer (2) nach einem der vorhergehenden Ansprüche, wobei jeder Hubfinger (30) an einem Schlitten (301) über eine oder mehrere Bolzen (307) angebracht ist, die sich radial in einem im Körper des Schlittens (301) ausgebildeten Schlitz verlagern und deren Weg in der radial nach innen verlaufenden Richtung begrenzt ist, und wobei ein elastisches Mittel (307a), dessen Wirkung darauf gerichtet ist, den Hubfinger (30) vom Schlitten (301) radial zu entfernen, zwischen dem Hubfinger (30) und dem Schlitten (301) angeordnet ist.

6. Vorrichtung zum Transfer (2) nach einem der vorhergehenden Ansprüche, wobei eine Laufrolle (308) mit einer zur axialen Richtung und zur radialen Richtung senkrechten Achse auf der radial inneren Seite jedes Hubfingers (30) angeordnet ist.

7. Vorrichtung zum Transfer (2) nach einem der vorhergehenden Ansprüche, wobei die ringförmige Struktur (20) außerdem mehrere Andrückschuhe (32) trägt, die dazu bestimmt sind, mit der radial äußeren Fläche des Laufstreifens (4) in Kontakt zu kommen, unter der Wirkung eines Andrückzylinders (320) radial beweglich sind und in Umfangsrichtung derart auf der ringförmigen Struktur (20) angeordnet sind, dass ein Aufziehschuh (32) zwischen zwei in Umfangsrichtung nebeneinander angeordneten Aufziehsohlen (31) angeordnet ist.

8. Vorrichtung zum Transfer (2) nach einem der vorhergehenden Ansprüche, wobei die ringförmige Struktur (20) zwischen einer zylindrischen Konfektionstrommel (110) und einer zylindrischen Montagetrommel (120) axial beweglich ist.

9. Verfahren zum Transfer (2) eines Laufstreifens (4) in Form eines Ringes mithilfe einer Vorrichtung nach einem der Ansprüche 1 bis 8, wobei die folgenden Schritte ausgeführt werden:
- Schritt a: Es wird ein Laufstreifen (4) in Ringform auf einer zylindrischen Konfektionstrommel (110) mit variablem Durchmesser angebracht,
- Schritt b: Unter Herbeiführung einer Übereinstimmung einer Mittellinie des Laufstreifens und der Symmetrieebene (PP') der Hubfinger (30) werden die Aufziehsohlen (31) an der radial äußeren Fläche des Laufstreifens (4) zur Anlage gebracht, wobei der Druck in den Aufziehzylindern auf einen ersten Solldruck eingestellt wird,
- Schritt c: Der Durchmesser der Konfektionstrommel (110) wird verkleinert, bis sich die radial innere Fläche des Laufstreifens (4) nicht mehr in Kontakt mit der Oberfläche der Konfektionstrommel (110) befindet, und die ringförmige Struktur (20) wird axial übertragen,
- Schritt d: Die Hubfinger (30) werden in eine erste radiale Position gebracht, und die Hubfinger (30) werden axial gegenüber der radial inneren Fläche des Laufstreifens (4) positioniert, wobei die Hubfinger (30) seitlich beiderseits des Laufstreifens (4) im gleichen Abstand von der Symmetriemittelebene (PP') angeordnet werden,
- Schritt e: Die Hubfinger (30) werden in eine zweite radiale Position verlagert, um den Laufstreifen (4) an seiner radial inneren Fläche zu erfassen und den Umfang des Laufstreifens (4) zu vergrößern,
- Schritt f: die Vorrichtung zum Transfer (2) wird axial verlagert, um die radial innere Fläche des Laufstreifens (4) gegenüber der radial äußeren Fläche eines Laufflächen-Verstärkungsgürtels (5) des Reifens zu positionieren, der zuvor auf einer Montagetrommel (120) angeordnet wurde,
- Schritt g: Die Hubfinger (30) werden in eine dritte radiale Position verlagert, um den Umfang des Laufstreifens (4) zu verkleinern, bis der mittlere Teil des Laufstreifens (4) mit der radial äußeren Fläche des Laufflächen-Verstärkungsgürtels (5) in Kontakt kommt,
- Schritt h: Die Hubfinger (30) werden axial außer Eingriff mit dem Laufstreifen (4) gebracht,
- Schritt i: Die Aufziehsohlen (31) werden wieder radial nach außen bewegt, um das Lösen der Vorrichtung zum Transfer aus dem Eingriff mit der Montagestation zu ermöglichen.

10. Verfahren zum Transfer nach Anspruch 9 mithilfe einer Vorrichtung zum Transfer nach Anspruch 4, wobei im Schritt b bewirkt wird, dass mehrere Stacheln (313) in die radial äußere Fläche des Laufstreifens (4) eindringen.

11. Verfahren zum Transfer nach Anspruch 9 oder Anspruch 10 mithilfe einer Vorrichtung zum Transfer nach Anspruch 5, wobei im Schritt g die Hubfinger (30) mit der radial äußeren Fläche des Laufflächen-Verstärkungsgürtels (5) in Kontakt kommen und sich unter der Wirkung der elastischen Mittel (307a) radial verlagern.

12. Verfahren zum Transfer nach Anspruch 11 mithilfe einer Vorrichtung zum Transfer nach Anspruch 6, wobei im Schritt h die Hubfinger (30) auf der radial äußeren Fläche des Laufflächen-Verstärkungsgürtels (5) rollen.

13. Verfahren zum Transfer nach einem der Ansprüche 9 bis 12 mithilfe einer Vorrichtung zum Transfer nach Anspruch 7, wobei im Schritt h die folgenden Teilschritte ausgeführt werden:
- Schritt ha: Die Andrückschuhe (32) werden mit der radial äußeren Fläche des Laufstreifens (4) in Kontakt gebracht, und es wird ein Anpressdruck ausgeübt, um die radial innere Fläche des Laufstreifens (4) und die radial äußere Fläche des Laufflächengürtels (5) teilweise in Verbindung zu bringen,
- Schritt hb: Der Druck in den Aufziehzylindern (310) wird auf einen dritten Sollwert eingestellt, der wesentlich kleiner als der erste Sollwert ist,
- Schritt hc: Die Hubfinger (30) werden axial außer Eingriff mit dem Laufstreifen (4) gebracht,
- Schritt hd: Der Druck in den Aufziehzylindern (310) wird auf einen vierten Sollwert eingestellt, der größer oder gleich dem ersten Sollwert ist, um die gesamte radial innere Fläche des Laufstreifens (4) und die gesamte radial äußere Fläche des Laufflächengürtels (5) in Verbindung zu bringen.

14. Verfahren zum Transfer nach einem der Ansprüche 9 bis 13, wobei der Laufstreifen (4) auf der Konfektionstrommel (110) durch Aufwickeln eines Streifens mit geringem Querschnitt oder einer Folie mit geringer Dicke hergestellt wird, die aus einem nicht vulkanisierten und heißen Elastomermaterial ausgebildet sind.

15. Verfahren zum Transfer nach einem der Ansprüche 9 bis 13, wobei der Laufstreifen (4) ein Ring ist, der aus einem vulkanisierten Elastomermaterial ausgebildet ist und Umgebungstemperatur aufweist.

## Claims

1. Device (2) for transferring a ring of elastomer intended to form a tyre tread (4), comprising an annular structure (20) on the circumference of which a plurality of gripping modules (3) are disposed, each of the modules comprising:
- two lifting fingers (30) that are intended to engage with the radially internal surface of the tread (4), are disposed opposite one another on either side of a plane of symmetry (PP'), are axially movable in opposite directions with respect to said plane of symmetry (PP') and are radially movable between a plurality of predetermined radial positions,
- a wrapping sole (31) that is radially movable under the action of one or more wrapping cylinders (310) and is intended to come into contact with the radially external surface of the tread (4),
**characterized in that** the wrapping cylinders (310) are pressure-regulated around a number of setpoint pressures that are different from one another, such that, at a given setpoint pressure that is identical for all of the wrapping cylinders of the wrapping device, the application pressure exerted by the wrapping sole (31) on the radially external surface of the tread (4) is constant regardless of the radial position of said wrapping sole.

2. Transfer device (2) according to Claim 1, wherein the gripping modules (3) are distributed equidistantly around the entire circumference of the annular structure (20) .

3. Transfer device (2) according to Claim 1 or Claim 2, wherein, for each of the predetermined radial positions of the lifting fingers (30), the radially external surface of the lifting fingers is substantially inscribed on a cylinder.

4. Transfer device (2) according to any one of the preceding claims, wherein the radially internal face of the wrapping soles (31) has spikes (313) for penetrating the radially external surface of the tread.

5. Transfer device (2) according to any one of the preceding claims, wherein each lifting finger (30) is mounted on a carriage (301) by way of one or more pins (307), moving radially in a hole made in the body of the carriage (301), the travel of which is limited in the radially internal direction, and wherein an elastic means (307a), the action of which causes the lifting finger (30) to be moved radially away from the carriage (301), is interposed between the lifting finger (30) and the carriage (301).

6. Transfer device (2) according to any one of the preceding claims, wherein a wheel (308) of axis perpendicular to the axial direction and to the radial direction is disposed on the radially internal face of each lifting finger (30).

7. Transfer device (2) according to any one of the preceding claims, wherein the annular structure (20) also supports a plurality of application shoes (32) that are intended to come into contact with the radially external surface of the tread (4), are radially movable under the action of an application cylinder (320) and are disposed circumferentially on the annular structure (20) such that a wrapping shoe (32) is positioned between two circumferentially juxtaposed wrapping soles (31).

8. Transfer device (2) according to one of the preceding claims, wherein the annular structure (20) is axially movable between a cylindrical tyre-building drum (110) and a cylindrical tyre-assembly drum (120).

9. Method for transferring a tread (4) in the form of a ring with the aid of a device according to any one of Claims 1 to 8, wherein the following steps are implemented:
- step a: a tread (4) in the form of a ring is fitted on a variable-diameter cylindrical tyre-building drum (110),
- step b: by bringing a central line of the tread into correspondence with the plane of symmetry (PP') of the lifting fingers (30), the wrapping soles (31) are brought to bear on the radially external surface of the tread (4), adjusting the pressure in the wrapping cylinders to a first setpoint pressure,
- step c: the diameter of the tyre-building drum (110) is reduced until the radially internal surface of the tread (4) is no longer in contact with the surface of the tyre-building drum (110), and the annular structure (20) is transferred axially,
- step d: the lifting fingers (30) are positioned in a first radial position and the lifting fingers (30) are positioned axially opposite the radially internal surface of the tread (4), said lifting fingers (30) being disposed laterally on either side of the tread (4), equidistantly from the median plane of symmetry (PP'),
- step e: the lifting fingers (30) are moved into a second radial position so as to grasp the tread (4) by its radially internal surface and to increase the circumference of the tread (4),
- step f: the transfer device (2) is moved axially so as to position the radially internal face of the tread (4) opposite the radially external surface of a tyre crown reinforcing belt (5) disposed beforehand on a tyre-assembly drum (120),
- step g: the lifting fingers (30) are moved into a third radial position so as to reduce the circumference of the tread (4) until the central part of the tread (4) comes into contact with the radially external surface of the crown reinforcing belt (5),
- step h: the lifting fingers (30) are disengaged axially from the tread (4),
- step i: the wrapping soles (31) are raised radially outwards so as to allow the disengagement of the transfer device from the assembly station.

10. Transfer method according to Claim 9, using a transfer device according to Claim 4, wherein, during step b, a plurality of spikes (313) are made to penetrate into the radially external surface of the tread (4).

11. Transfer method according to Claim 9 or 10, using a transfer device according to Claim 5, wherein, during step g, the lifting fingers (30) come into contact with the radially external surface of the crown reinforcing belt (5) and are moved radially under the effect of the action of the elastic means (307a).

12. Transfer method according to Claim 11, using a transfer device according to Claim 6, wherein, during step h, the lifting fingers (30) roll on the radially external surface of the crown reinforcing belt (5).

13. Transfer method according to any one of Claims 9 to 12, using a transfer device according to Claim 7, wherein, during step h, the following substeps are carried out:
- step ha: the application shoes (32) are placed in contact with the radially external surface of the tread (4), and an application pressure is exerted so as to partially bring together the radially internal surface of the tread (4) and the radially external surface of the crown belt (5),
- step hb: the pressure in the wrapping cylinders (310) is adjusted to a third nominal value, much lower than the first nominal value,
- step hc: the lifting fingers (30) are disengaged axially from the tread (4),
- step hd: the pressure in the wrapping cylinders (310) is adjusted to a fourth nominal value greater than or equal to the first nominal value so as to bring together the radially internal surface of the tread (4) and the radially external surface of the crown belt (5).

14. Transfer method according to any one of Claims 9 to 13, wherein the tread (4) is produced on the tyre-building drum (110) by winding a strip of small section or a sheet of small thickness, which are formed of a non-vulcanized and hot elastomeric material.

15. Transfer method according to any one of Claims 9 to 13, wherein the tread (4) is a ring, formed of a vulcanized elastomeric material at ambient temperature.
